# EUROPEAN PATENT APPLICATION

(11) **EP 1 976 342 A1**
(43) Date of publication of application: **01.10.2008**
(21) Application number: 05824078.9
(22) Date of filing: 27.12.2005
(51) Int. Cl.: H05B 41/02

(54) **METAL HALOGENATION LAMP ELECTRON DRIVER**

(71) Applicant: Huen, Waikei, Yue Wa Garden Macao (CN); Poon, Lock Kee Rocky, Macau (CN); Li, Yun, Macau (CN)
(72) Inventor: Huen, Waikei, Yue Wa Garden Macao (CN); Poon, Lock Kee Rocky, Macau (CN); Li, Yun, Macau (CN)
(74) Representative: Herbjörnsen, Rut
(86) International application number: PCT/CN2005/002325
(87) International publication number: WO 2007/073615

(57) **Abstract**

An electric driver for metal halide lamp, comprises: an input circuit, a power factor correction circuit, a DC-DC switch power, a control circuit and an output circuit. Advanced PWM current control and PWM voltage control are applied in the invention. For purpose of power saving and higher efficiency, high frequency PWM technique and push-pull output without transformer are utilized in circuit switching. The power factor of the circuit according to the invention can reach up to 99% after parameter adjustment and optimization. The circuit in the invention can also advantageously achieve: a wider range of input voltage (165-265kV), constant current and constant power, stable luminance free of external interference, advanced over-current protection and over-voltage protection circuit and break protection, and higher operational stability.

## Description

### TECHNICAL FIELD

The present invention relates to an electric driver, and more particular, to an electric driver for metal halide lamp.

### BACKGROUND

Metal halide lamp is widely used in daily life, such as beside street, exhibition center, car park in a square, industrial and mining establishments and large-scale salon, since it has high illumination, good efficiency, longer service life and lower power consumption.

Nowadays, people are facing increasingly serious problem on energy shortage. It thus requires people save power during daily life and in various public facilities as much as possible. The metal halide lamp has been well developed for several decades. However, the driver circuit of metal halide lamp encounters the problem of having lower rated frequency, a large scale transformer, higher power consumption and low efficiency. Consequently, it is desirable to develop an electric driver for metal halide lamp with low power consumption, higher efficiency, wider input voltage scope and stable illumination.

### SUMMARY OF THE INVENTION

The present invention provides an electric driver for metal halide lamp in view of above problems.

There is provided an electric driver for metal halide lamp which comprises: an input circuit for rectifying and filtering an alternating voltage with a certain amplitude; a power factor correction circuit for further amplifying the voltage rectified and filtered by the input circuit to obtain a DC voltage with a higher amplitude; a DC-DC switch power for converting the DC voltage outputted from the power factor correction circuit to another DC voltage; a control circuit for receiving said another DC voltage outputted from the DC-DC switch power as its operating power supply and supplying the metal halide lamp with high voltage pulse excitation; and an output circuit for receiving the DC voltage outputted from the power factor correction circuit as its operating power supply and supplying the metal halide lamp an output without input transformer and without output transform.

As an example of the electric driver for metal halide lamp according to an embodiment of the invention, the input circuit includes bridge-type rectifier and LC filter and converts 220V AC input voltage to about 280V pulse DC voltage; the power factor correction circuit includes a further boosting circuit for obtaining a stable DC voltage of about 400V from the pulse DC voltage of 280V; the DC-DC switch power converting the 400V DC voltage supplied from the power factor correction circuit to a DC 15V voltage as the power supply of the control circuit; the control circuit providing a high voltage for exciting the metal halide lamp, said high voltage is within the range of about 3-4kV at frequency of about 50kHz and lasts for about 1 minute; the output circuit is configured as a push-pull power output circuit.

As an example of the electric driver for metal halide lamp according to an embodiment of the invention, wherein the output circuit further comprises current protector, anti-EMI coil and thermal sensitive resistor.

As an example of the electric driver for metal halide lamp according to an embodiment of the invention, wherein the power factor correction circuit comprises voltage comparison circuit, multiplier, current difference amplifier, inductor (B1), high power transistor (Q1), rectifying diode (D1), capacitor (C7); the power factor correction circuit is capable of detecting a secondary feedback current from the detection inductor (B1) to stop outputting when the external striking current is excessive so as to achieve over-current protection; the voltage comparison circuit controls the output with use of voltage comparison, and stops outputting when the voltage is too low so as to achieve under-voltage lock out; the current difference amplifier is used to detect the current inputted externally and control the output so as to ensure the output stable.

As an example of the electric driver for metal halide lamp according to an embodiment of the invention, wherein the power factor correction circuit comprises an IC module L6561 having voltage comparison circuit, multiplier, and current difference amplifier.

As an example of the electric driver for metal halide lamp according to an embodiment of the invention, wherein the input voltage can maintain the normal operation of the driver within the input voltage and frequency range as defined according to the international standard, wherein it is able to ensure the stable output voltage when the input voltage varies at the range of from 85 to 265V, preferably from 160-265V and more preferably from 165 to 265V

As an example of the electric driver for metal halide lamp according to an embodiment of the invention, wherein the DC-DC switch power comprises a voltage stabilizing tube and a resistor and capacitor for providing feedback.

As an example of the electric driver for metal halide lamp according to an embodiment of the invention, wherein the DC-DC switch power further comprises an integrated circuit module TOP227 having over-heat protection and over-current protection circuit.

As an example of the electric driver for metal halide lamp according to an embodiment of the invention, wherein the control circuit comprises a timing circuit providing a delay with quick charge and slow discharge, dual operational amplifier, oscillator, pulse width modulation switch, current detection comparison circuit, and transistor for starting of oscillation (Q2), wherein the transistor for starting of oscillation is driven by the output of oscillator, when an oscillating loop connected to the drain of transistor for starting of oscillation (Q2) starts resonance, a high-frequency back eletromotive force is generated and applied across the metal halide lamp through the output circuit; the current from the resonance loop feedbacks to the input of current detection comparison circuit for controlling the duty ratio and chopping the peak of waveform so as to achieve over-current restriction, when the current from input current comparison circuit flows through a detection resistor to establish a higher input voltage than a predetermined threshold, the pulse width modulation switch is disabled, the oscillating loop stops oscillating and the output circuit maintains the luminance of the metal halide lamp at inherent operating frequency so as to achieve the over-current protection and under-voltage lock out.

As an example of the electric driver for metal halide lamp according to an embodiment of the invention, wherein the timing circuit comprises an integrated circuit module LM555 (IC2), the dual operational amplifier comprises an integrated circuit module L358 (IC3), and the pulse width modulation switch and current detection comparison circuit comprise integrated circuit modules UC3843 (IC3) or UC 3842 (IC4);

As an example of the electric driver for metal halide lamp according to an embodiment of the invention, wherein the output circuit comprises a push-pull driver and bridge-type output circuit.

As an example of the electric driver for metal halide lamp according to an embodiment of the invention, wherein the push-pull driver comprises IC module IR2153 (IC7) and IR2111 (IC6).

Advanced PWM current control and PWM voltage control are applied in the invention. For purpose of power saving and higher efficiency, high frequency PWM technique and push-pull output without transformer are utilized in circuit switching. The power factor of the circuit according to the invention can reach up to 99% after parameter adjustment and optimization. The circuit in the invention can also advantageously achieve: a wider range of input voltage (165-265kV), constant current and constant power, stable luminance free of external interference, advanced over-current protection and over-voltage protection circuit and break protection, and higher operational stability.

### BRIEF DESCRIPTION OF THE DRAWINGS

Fig.1 is a general circuit block diagram showing an electric driver for metal halide lamp according to the present invention, including functional block 1, functional block 2, functional block 3, functional block 4, functional block 5 and connections thereof;
Fig.2 shows respective waveforms at point A, B, C, D, and F in Fig.1;
Fig.3 shows a specific circuit of implementing the general block as shown in Fig.1;
Fig.4 is a circuit diagram corresponding to the functional block 1 and functional block 2 in Fig.1, which are extracted from the specific circuit of Fig.3, and Fig.4 also shows respective waveforms at point A, B, C, and D in Fig.1
Fig.5 is a circuit diagram corresponding to the functional block 3 in Fig.1, which is extracted from the specific circuit of Fig.3;
Fig.6 is a circuit diagram corresponding to the functional block 4 in Fig.1, which is extracted from the specific circuit of Fig.3 and also shows respective waveforms at point E, G, H, and U in Fig.1;
Fig.7A is a circuit diagram corresponding to a part of functional block 5 in Fig.1, which is extracted from the specific circuit of Fig.3 and Fig.7A also shows respective waveforms at LO and HO of IR2135 and IR2111; and
Fig.7B is a circuit diagram corresponding to another part of functional block 5 in Fig.1, which is extracted from the specific circuit of Fig.3.

### PREFERRED EMBODIMENT

The inventive metal halide lamp will be described in detail with reference to an embodiment of the invention.

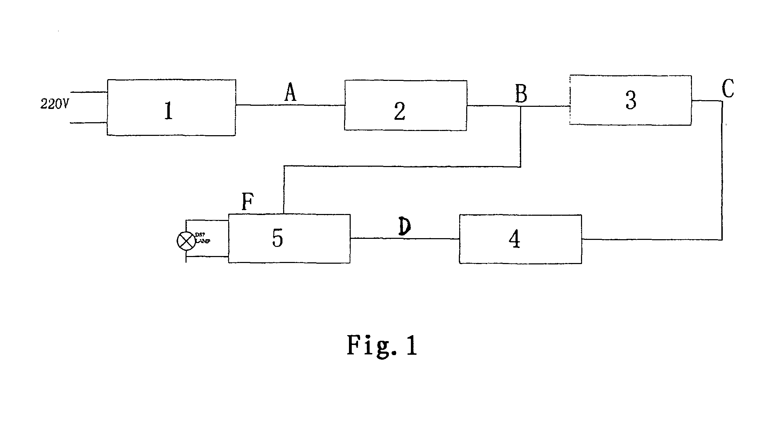

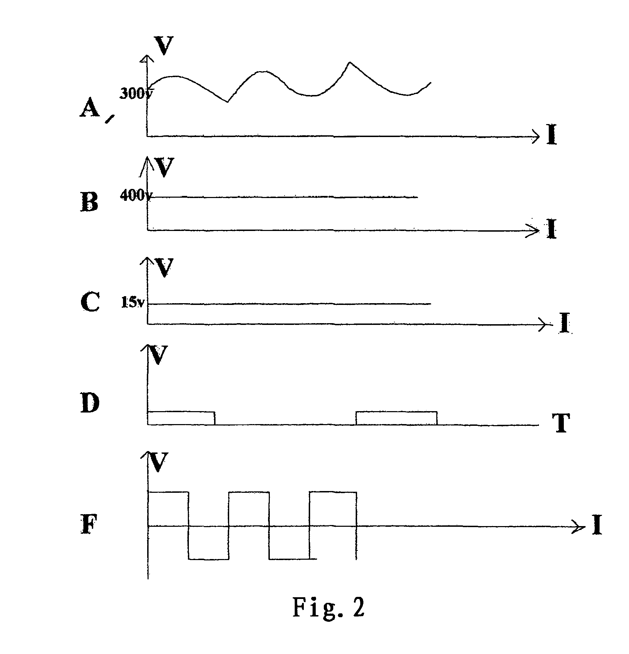

Fig.1 is a general circuit block diagram showing an electric driver for metal halide lamp according to the present invention, including functional block 1, functional block 2, functional block 3, functional block 4, functional block 5 and connections thereof as shown. Fig.2 shows respective waveforms at point A, B, C, D, and F in Fig.1.

Functional block 1 corresponds to input circuit for rectifying an alternating voltage, such as 220V, and filtering to obtain the waveform as shown in Fig.2 at output terminal A. Functional block 2 corresponds to power factor correction circuit for further rectification to obtain a higher and more stable direct voltage, such as about 400V (see, waveform B in Fig.2). The DC voltage is supplied to output circuit (Functional block 5) and supplied to DC-DC switch circuit (Functional block 3). The functional block 3 corresponds to DC-DC switch circuit which converts the higher and more stable direct voltage (such as about 400V) rectified by the power factor correction circuit to another DC voltage, such as DC 15V (see, waveform C in Fig.2) for supplying power to control circuit and driver circuit. The functional block 4 corresponds to control circuit for applying high voltage pulse excitation (see, waveform D in Fig.2) to illumine the metal halide lamp. The functional block 5 corresponds to output circuit for supplying push-pull power to the metal halide lamp without transformer (see, waveform F in Fig.2).

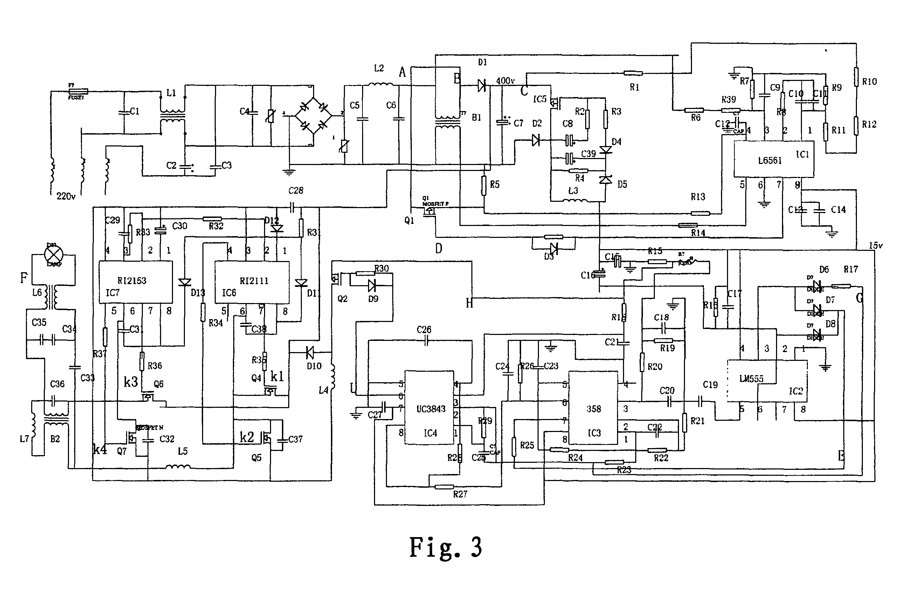

Fig.3 shows a specific circuit of implementing the general block as shown in Fig.1. for simplification, description is made with reference to the functional blocks as shown in Fig.1.

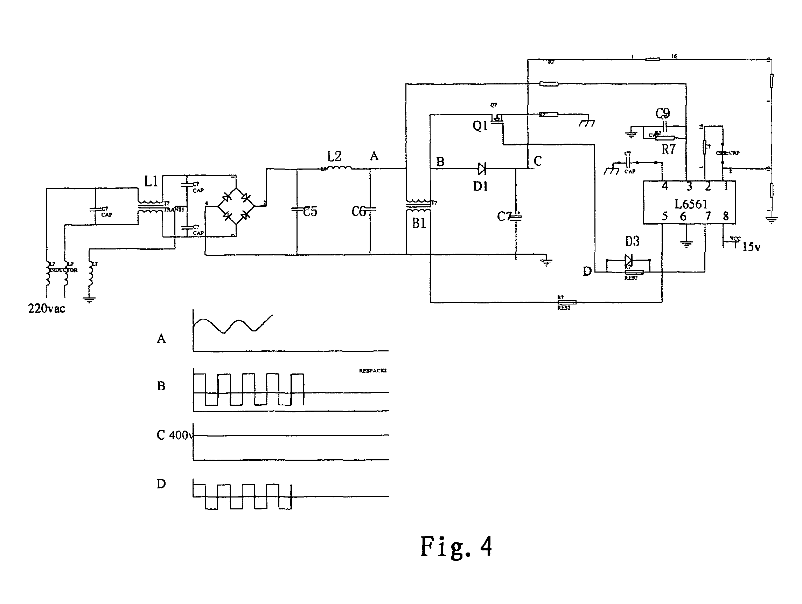

Fig.4 is a circuit diagram corresponding to the functional block 1 and functional block 2 in Fig.1, which are extracted from the specific circuit of Fig.3.

Seen from Fig.4, the input circuit may generally comprise a bridge-type rectifier and LC filter. Furthermore, the input circuit may preferably comprise a current protection block (e.g., FUSE 1 in Fig.3), an anti-EMI wiring coil L1, a thermal sensitive resistor (for example, R01 and R02 in Fig.3) and the like. The input circuit can rectify and filter an input alternating voltage with certain amplitude, such as 220V alternating voltage, to obtain the waveform as shown at point A. The input circuit will output about 280V fluctuant DC voltage by rectifying the external 220V alternating voltage with a bridge-type rectifier and filtering.

The power factor correction circuit may generally comprise voltage comparison circuit, multiplier, current difference amplifier, inductor B1, high power transistor Q1, rectifying diode D1, capacitor C7 and the like. The voltage comparison circuit, multiplier and current difference amplifier can be incorporated into an integrated circuit module L6561 (IC1) (for detailed information about this integrated circuit, please refer to relative circuit manual or access web page regarding the products of manufacturer, STMocroelectronics, for example, http://www.ic-on-line.cn/search.ash). Such circuit module can further boost the voltage so as to get to more stable DC voltage with higher amplitude, for example, further boosting of 280-400V can be carried out in the circuit exemplified.

Power transistor Q1 is a high power transistor with voltage tolerance of 400V. The gate (G) of Q1 is controlled by a square-wave signal with a frequency at about 100kc which is generated by pulse width modulation of L6561. At the drain of Q1 is generated a square-wave signal with amplitude of about over 200V superposing 280V DC, and a DC voltage of about 400V (point C) is generated through the rectification of diode D 1 and filtering of capacitor C7 for supply to the output circuit and supply to the DC-DC switch circuit.

The pin 1 and 2 of IC module L6561 correspond to voltage comparison circuit, even if the input voltage varies between 85-265V, preferably 160-265V and more preferably 165-265V, a stable output voltage can be ensured.

As shown in the drawings, the secondary current B1 feedbacks to pin 5 of L6561 for current detection. L6561 stop outputting when there flows an excessive external striking current, and this module has excellent over-current protective function.

Since L6561 has its own voltage comparison circuit, the voltage is controlled to be outputted from pin 1 and 2 after comparison. The outputting is stopped when a lower voltage occurs, and this module has also excellent under-voltage protective function. Because of the over-current protective function and under-voltage protective function, dynamically high-frequency striking from electricity grid can be prevented.

The pin 3 of L6561 corresponds to a multiplier whose oscillating frequency can be determined by external RC and B 1 secondary current ripple.

The pin 5 of L6561 corresponds to a current difference amplifier to which a current is inputted. The output of IC1 is controlled by the current under the current detection to ensure stable output.

Above configuration achieves a wider input voltage range and can operate normally within a widely variable range of input voltage and frequency as defined in international standard.

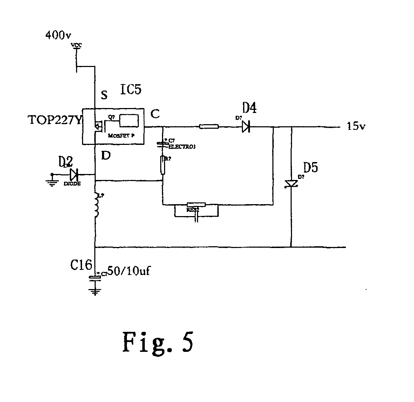

Fig.5 is a circuit diagram corresponding to the functional block 3 in Fig.1, which is extracted from the specific circuit of Fig.3. The functional block 3 corresponds to a DC-DC switch circuit, mainly including IC module TOP227 (for detailed information about this integrated circuit, please refer to relative circuit manual or access web page regarding the products of manufacturer, for example, "Manual for Power Integration", CHEMICAL INDUSTRY PRESS, Commercial Installation and Information Technology Publish Center); resistor and capacitor for providing feedback; and voltage stabilizing tube and so on. This circuit converts DC400V supplied from the power factor correction circuit to DC15V in order to supply power to the control circuit. TOP227 has its own over-heat protective and over-current protective function and is capable of providing stable output voltage.

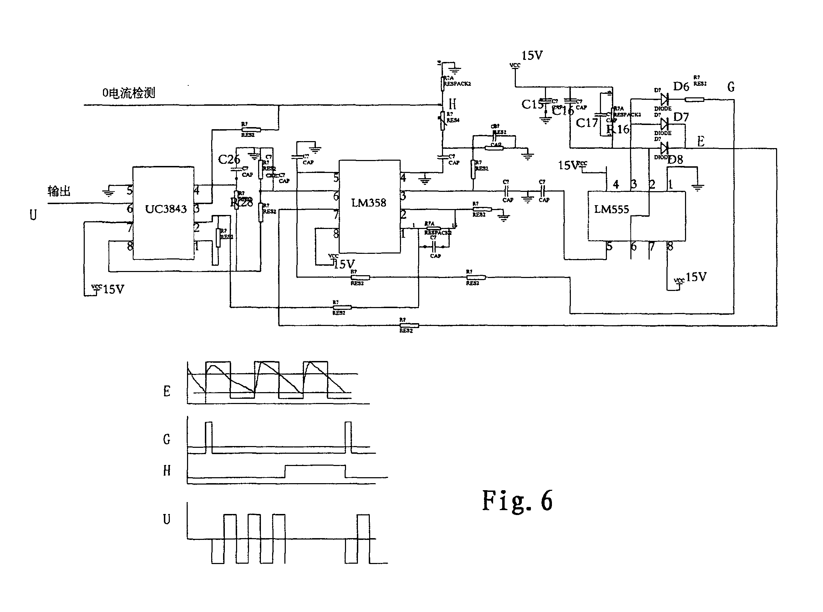

Fig.6 is a circuit diagram corresponding to the functional block 4 in Fig.1, which is extracted from the specific circuit of Fig.3. The functional block 4 corresponds to a control circuit which mainly includes: timing circuit, dual operational amplifier, oscillator, pulse width modulation switch, current detection comparison circuit, transistor for starting of oscillation Q2 and the like. The transistor for starting of oscillation is driven by the output of oscillator. When an oscillating loop connected to the drain of transistor for starting of oscillation starts resonance, a high-frequency back eletromotive force is generated and applied across the metal halide lamp through the output circuit; the current from the resonance loop feedbacks to the input of current detection comparison circuit for controlling the duty ratio and chopping the peak of waveform so as to achieve over-current restriction. When the current from input current comparison circuit flows through a detection resistor to establish a higher input voltage at input terminal than a predetermined threshold, the pulse width modulation switch is disabled, the oscillating loop stops and the output circuit maintains the luminance of the metal halide lamp at inherent operating frequency so as to achieve the over-current protection and under-voltage lock out.

In conjunction with the embodiment as shown, the timing circuit includes an integrated circuit module LM555 (IC2) (for detailed information about this integrated circuit, please refer to relative circuit manual or access web page regarding Intersil Corporation, for example, http://www.ic-on-line.cn/search.ash); the dual operational amplifier includes an integrated circuit module L358 (IC3) (for detailed information about this integrated circuit, please refer to relative circuit manual or access web site of the manufacturer Motorola. Inc, for example, http://www.ic-on-line.cn/search.ash); the pulse width modulation switch and current detection comparison circuit comprise integrated circuit module UC3843 (IC4) or UC3842 (IC4) (for detailed information about this integrated circuit, please refer to relative circuit manual or access web site of the manufacturer, for example, " Manual for Power Integration" , CHEMICAL INDUSTRY PRESS, Commercial Installation and Information Technology Publish Center).

To illumine the metal halide lamp, it is necessary to apply a high voltage of 3-4kV to excite the bulb at 50kHz. The metal halide lamp should be continuously illumined for about 1 minute to achieve natural brightness. Above function is achieved by LM555 (IC2), LM358 (IC3), and UC3843 (IC4) together. IC2, C16, R16, C17 and D8 construct a delay circuit for quick charge and slow discharge. A RS flip-flop is disposed in LM555, when pin 2 is high, pin 3 and pin 2 of UC3843 and are both low level, and the UC3843 starts oscillating when lower than 1V. UC3843 has an oscillator disposed therein whose oscillating frequency can be determined by C26 and R28. Pin 6 of UC3843 outputs a square wave to drive transistor Q2 (Fig.3). The drain of transistor Q2 is connected to a L4, C28 oscillating loop. The high frequency back eletromotive force generated upon resonance is applied across the metal halide lamp through the output circuit. UC3843 has an internal current detection comparison circuit, and the current from the resonance loop is fed back to the input of the comparison circuit. When the luminance of metal halide lamp increasingly enhances, the current in the loop increases correspondingly and the current under over-current detection in UC3843 also increases. Accordingly, when the input current of the comparison circuit increases and is involved in the control of duty ratio of the cycle, the peak of wave is restricted, and it is possible to achieve favorable over-current restriction property. When the input current of the comparison circuit flows through the detection resistor to establish a higher input voltage at input terminal than a predetermined threshold (e.g., 1V), UC3843 is disabled and L4, C28 stops oscillating while D6 is reversely biased, and output circuit (as described below) IR2153 and IR21114 push Q5, Q6 and Q7, Q4 to turn on and off at the inherent operating frequency so as to maintain the luminance of the metal halide lamp. Accordingly, UC3843 has outstanding over-current protection and under-voltage lock out function.

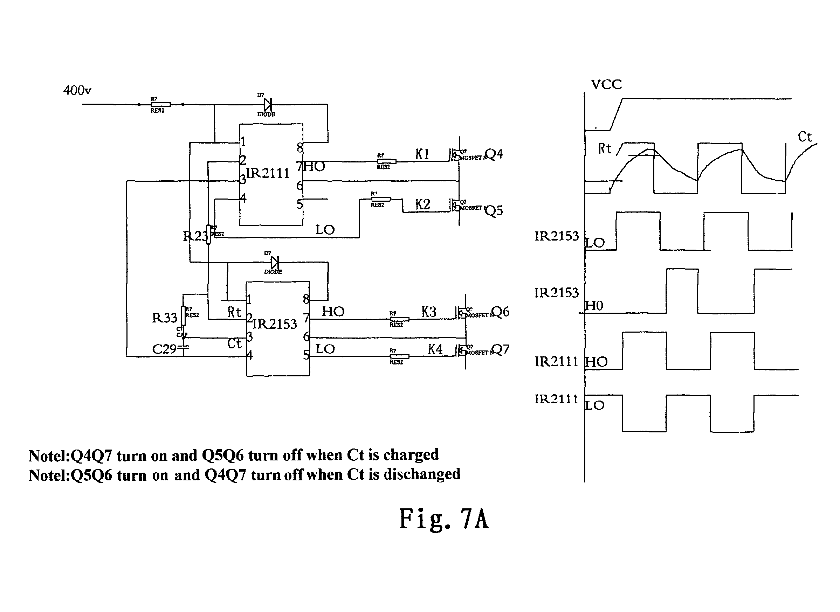

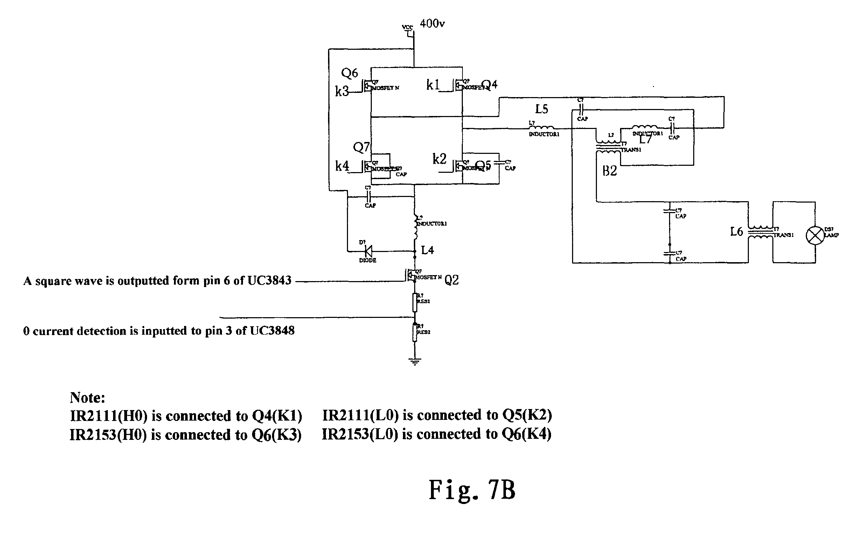

Fig.7A is a circuit diagram corresponding to a part of functional block 5 in Fig.1, which is extracted from the specific circuit of Fig.3 and Fig.7A also shows respective waveforms at LO and HO of IR2135 and IR2111. Fig.7B is a circuit diagram corresponding to another part of functional block 5 in Fig.1, which is extracted from the specific circuit of Fig.3.

The functional block 5 corresponds to an output circuit which mainly comprises: IC module IR2153 (for detailed information about this integrated circuit, please refer to relative circuit manual or access web site of manufacturer, such as, http://www.ic-on-line.cn/search.ash), IR2111 (for detailed information about this integrated circuit, please refer to relative circuit manual or access web site of manufacturer, such as, http://www.ic-on-line.cn/search.ash), transistor Q4, Q5, Q6 and Q7 and the like.

A push-pull driver is composed of IC modules IR2153 (IC7) and IR2111 (IC6) and a bridge-type output is composed of Q4, Q5, Q6 and Q7. Preferably, Q4, Q5, Q6 and Q7 that compose a bridge-type output are field effect transistors with high impedance, low power consumption and good frequency response. The four transistors is push-pull driven by IC6 and IC7 during operation. Q5Q6 turn off when Q4Q7 turn on, and Q4Q7 turn off when Q5Q6 turn on. The metal halide lamp is coupled through L7 to maintain the luminance thereof.

The push-pull driver circuit, without input-transformer and without output-transform, being constructed with use of the characteristics of IR2153 and IR2111, drives Q4Q6 and Q5Q7 on alternately. The advantage of saving power can be achieved, and the invention can further reduce the nonlinear interference introduced by inert element such transformer.

According to real adjustment testing, after several parameters of the circuit are adjusted and optimized according to the invention, the power factor of the whole drive circuit can be designed up to 99%.

While the invention has been described with reference to the drawings and specific circuit, it will be appreciated that many variations, modifications, and other applications of the invention may be made to the specific implementation and elements without departing the spirit and scope of the invention.

## Claims

1. An electric driver for metal halide lamp, comprises:
an input circuit for rectifying and filtering an alternating voltage with a certain amplitude;
a power factor correction circuit for further amplifying the valtage rectified and filtered by the input circuit to obtain a DC voltage with a higher amplitude;
a DC-DC switch power for converting the DC voltage outputted from the power factor correction circuit to another DC voltage;
a control circuit for receiving said another DC voltage outputted from the DC-DC switch power as its operating power supply and supplying the metal halide lamp with high voltage pulse excitation; and
an output circuit for receiving the DC voltage outputted from the power factor correction circuit as its operating power supply and supplying the metal halide lamp an output without input transformer and without output transform.

2. The electric driver for metal halide lamp according to claim 1, wherein
the input circuit including bridge-type rectifier and LC filter and converting 220V AC input voltage to about 280V pulse DC voltage;
the power factor correction circuit including a further boosting circuit for obtaining a stable DC voltage of about 400V from the pulse DC voltage of 280V;
the DC-DC switch power converting the 400V DC voltage supplied from the power factor correction circuit to a DC 15V voltage as the power supply of the control circuit;
the control circuit providing a high voltage for exciting the metal halide lamp, said high voltage is within the range of about 3-4kV at frequency of about 50kHz and lasts for about 1 minute;
the output circuit is configured as a push-pull power output circuit.

3. The electric driver for metal halide lamp according to claim 2, wherein the output circuit further comprises current protector, anti-EMI coil and thermal sensitive resistor.

4. The electric driver for metal halide lamp according to claim 2, wherein the power factor correction circuit comprises voltage comparison circuit, multiplier, current difference amplifier, inductor (B1), high power transistor (Q1), rectifying diode (D1), capacitor (C7); the power factor correction circuit is capable of detecting a secondary feedback current from the detection inductor (B1) to stop outputting when the external striking current is excessive so as to achieve over-current protection; the voltage comparison circuit controls the output with use of voltage comparison, and stops outputting when the voltage is too low so as to achieve under-voltage lock out; the current difference amplifier is used to detect the current inputted externally and control the output so as to ensure the output stable.

5. The electric driver for metal halide lamp according to claim 4, wherein the power factor correction circuit comprises an IC module L6561 having voltage comparison circuit, multiplier, and current difference amplifier, the gate of power transistor Q1 is controlled by a square wave signal outputted by L6561 through pulse width modulation, a square wave signal with amplitude of about 200V is generated at the drain of Q1, and this signal is superposed on a DC voltage of 400V which is generated by rectifying and filtering the DC voltage of 280V through a diode (D1) and a capacitor (C7).

6. The electric driver for metal halide lamp according to claim 5, wherein the input voltage can maintain the normal operation of the driver within the input voltage and frequency range as defined according to the international standard, wherein it is able to ensure the stable output voltage when the input voltage varies at the range of from 85 to 265kV, preferably from 160-265kV and more preferably from 165 to 265kV.

7. The electric driver for metal halide lamp according to claim 2, wherein the DC-DC switch power comprises a voltage stabilizing tube and a resistor and capacitor for providing feedback.

8. The electric driver for metal halide lamp according to claim 7, wherein the DC-DC switch power further comprises an integrated circuit module TOP227 having over-heat protection and over-current protection circuit.

9. The electric driver for metal halide lamp according to claim 2, wherein the control circuit comprises a timing circuit providing a delay with quick charge and slow discharge, dual operational amplifier, oscillator, pulse width modulation switch, current detection comparison circuit, and transistor for starting of oscillation (Q2), wherein the transistor for starting of oscillation is driven by the output of oscillator, when an oscillating loop connected to the drain of transistor for starting of oscillation (Q2) starts resonance, a high-frequency back eletromotive force is generated and applied across the metal halide lamp through the output circuit; the current from the resonance loop feedbacks to the input of current detection comparison circuit for controlling the duty ratio and chopping the peak of waveform so as to achieve over-current restriction, when the current from input current comparison circuit flows through a detection resistor to establish a higher input voltage than a predetermined threshold, the pulse width modulation switch is disabled, the oscillating loop stops oscillating and the output circuit maintains the luminance of the metal halide lamp at inherent operating frequency so as to achieve the over-current protection and under-voltage lock out.

10. The electric driver for metal halide lamp according to claim 9, wherein the timing circuit comprises an integrated circuit module LM555 (IC2), the dual operational amplifier comprises an integrated circuit module L358 (IC3), and the pulse width modulation switch and current detection comparison circuit comprise integrated circuit modules UC3843 (IC3) or UC 3842 (IC4);
wherein LM555 comprised of the delay circuit with quick charge and slow discharge has a RS flip-flop therein, when pin 2 is high level, the pin 3 and pin 2 of UC3843 are both low level, the UC3843 starts oscillating when lower than 1V; the UC3843 has an oscillator disposed therein whose oscillating frequency can be determined by the elements (C26, R28) connected externally, pin (6) of UC3843 outputs a square wave to drive transistor (Q2) for starting oscillating, the drain of transistor (Q2) is connected to a oscillating loop (L4, C28), the high frequency back eletromotive force generated upon resonance is applied across the metal halide lamp through the output circuit; the UC3843 has an internal current detection comparison circuit, and the current from the resonance loop is fed back to the input of the comparison circuit, when the luminance of metal halide lamp increasingly enhances, the current in the loop increases correspondingly and the current under over-current detection in UC3843 also increases, when the input current of the comparison circuit increases and is involved in the control of duty ratio of the cycle, the peak of wave is restricted; when the input current of the comparison circuit flows through the detection resistor to establish a higher input voltage at input terminal than a predetermined threshold, the UC3843 is disabled and oscillating loop (L4, C28) stops oscillating, and the output circuit operates at the inherent operating frequency so as to maintain the luminance of the metal halide lamp.

11. The electric driver for metal halide lamp according to claim 2, wherein the output circuit comprises a push-pull driver and bridge-type output circuit.

12. The electric driver for metal halide lamp according to claim 11, wherein the push-pull driver comprises IC module IR2153 (IC7) and IR2111 (IC6).

13. The electric driver for metal halide lamp according to claim 11, wherein the bridge-type output circuit is composed of field effect transistors (Q4, Q5, Q6 and Q7) with high impedance, low power consumption and good frequency response.

14. The electric driver for metal halide lamp according to any one of claims 1-13, wherein the power factor thereof reaches up to 99%.
